# EUROPEAN PATENT SPECIFICATION

(11) **EP 1 555 882 B1**
(45) Date of publication and mention of the grant of the patent: **24.05.2006**
(21) Application number: 03757728.5
(22) Date of filing: 20.10.2003
(51) Int. Cl.: A22C 17/00, A22C 25/18

(54) **APPARATUS FOR PORTION CUTTING OF FOOD PRODUCTS OR SIMILAR ITEMS**
APPARAT ZUM PORTIONIEREN VON NAHRUNGSMITTELN
APPAREIL POUR COUPER DES PORTIONS D'ALIMENTS OU D'ARTICLES SIMILAIRES

(30) Priority: 21.10.2002 DK 200201602
(43) Date of publication of application: 27.07.2005
(73) Proprietor: Scanvaegt International A/S, 8200 Arhus N (DK)
(72) Inventor: MIKKELSEN, Peter, DK-3740 Svaneke (DK); SORENSEN, Gorm, DK-3720 Aakirkeby (DK)
(74) Representative: Olesen, Kaj
(86) International application number: PCT/DK2003/000707
(87) International publication number: WO 2004/034794

(56) References cited:
- WO-A-01/32369
- DK-U- 9 600 164
- US-A- 1 405 238

## Description

The present invention relates to an apparatus for portion cutting of products, such as food products, said apparatus comprising cutting means for sectioning the products; scanning means for detecting at least one characteristic of the product; conveying means for transporting the product from the scanning means to the cutting means; and control means for controlling and regulating at least one relevant cutting process parameters in order to achieve predetermined product portions based on the detected product characteristics.

From Danish utility model no. DK 96 00164 U3 such an apparatus for portion cutting of food products is known. Herein, a machine for portion cutting of food products is described, which comprises a rotatable cutting unit for sectioning the products, which are guided through the cutting unit by a first and second conveyor respectively. A vision system for detecting the geometry of the products is arranged by the first conveyor. The form of the products is registered in a control system that can control the machine for portion cutting the products into a predetermined weight, length or size based on the shape of the products and control the conveying velocity of the first conveyor.

Such an apparatus, a so-called portion cutter, is used in particular in the food processing industry for cutting fish, poultry, pork or beef products into predetermined portion types and sizes.

In order to ensure a uniform cutting of the products in predetermined portion types or sizes, it is important that the products do not move on the conveyor once the shape of the product is registered by the vision system. This would cause the subsequent cutting to become imprecise. In connection to the apparatus according to DK 96 00164 U3, a holder for retaining the products during cutting is described.

The products are guided on a conveyor and scanned in a vision system. On basis of this registered product shape and/or average density and the conveyor velocity, the cutting rate of the cutting unit is controlled, so that the portions or slices become uniform or in a predetermined size, so long as no relative movement between the products and the conveyor occurs between the vision system and the cutting unit.

For some food products it is a problem to handle the product on the conveyor, e.g. if the shape of the product and/or its texture means that the product may easily roll or otherwise move on the conveyor. This results in an imprecise portion cutting. In order to decrease this, it is suggested to use holding means that act on top of the product which gently pressing the product against the conveyor surface as it is being cut, so that the product does not move during the cutting. This holding means however, may cause the product to be slightly disfigured compared to the scanned shape of the product on which the cutting action is based.

On this background, it is the object of the present invention to provide an apparatus of the initially mentioned kind, wherein it is ensured that the products are lying stationary in relation to the conveyor in order to achieve a more precise portioning of food items.

This object is achieved by an apparatus of the initially mentioned kind, wherein the conveying means comprises at least one conveyor unit having two substantially parallel conveyors each having an upper conveying surface, said upper conveying surfaces being inclined relative to each other, so that the conveying surfaces of the conveyors have a mutual angle different from 180° in a traverse direction of the conveying direction.

Hereby, a reliable portion cutting apparatus is provided wherein food items, such as pork, beef or fish, are handled gentle and efficiently and it is ensured in a simple manner that the items are kept stationary relative to the conveyors during the processing of the items, and in particular may be sectioned into predetermined portions in a precise manner.

By configuring the conveyor unit between the scanning and the cutting stations in a portion cutter with a V-shape, as it is the case with a portion cutter according the invention, a precise cutting may be achieved since the products are supported in a stabile manner. This means that the holding means are not needed. This in turn reduced the amount of conveyor belts or similar equipment making contact with the food product, which increases the food safety in hygienic terms, just as any squeezing or pinching action in not inflicted on the food product. This makes the portion cutter according to the invention particularly useful for portion cutting of fresh food products as the juice of the fresh product is naturally drained from the conveyor unit.

In a preferred embodiment of the portion cutter, the conveying means comprises a first conveyor unit for receiving the products and downstream of the first conveyor unit a second conveyor unit, which takes the products to the cutting means and a third conveyor unit, which transports the sectioned products away from the cutting means. Preferably, both the first, second and third conveyor unit comprises two parallel mutually inclined conveyors, and that the parallel conveyors of the conveyor units are arranged with the same mutual inclination in each of the conveyor units. Other feeding and discharging conveyor units may be used. By using

According to the invention, a conveying surface is provided which is not planar. This results in an automatic alignment of the products on the conveyor units and ensures that no relative movement occurs between the products and the conveyors in the conveyor units, as the products rest on two sides of the conveyors. The use of the apparatus is particularly useful for products that easily move, e.g. roll or tilt, or more generally products without a flat side; however, it is realised that the portion cutter according to the invention is also useful for cutting flat items, such as fish fillets or the like. It is realised that somewhat elastic products, such as pre-cooked meet products or the like, may advantageously be cut into portions by use of a portion cutter according to the invention.

The scanning means are arranged between the first and the second conveyor units and preferably include a scanner adapted to perform a 360° scanning of the products. Hereby, both the upper and lower the contour of the individual products may be established and the cutting action may be adjusted to the individual food items to be sectioned into portions. This results in that the form of products, which are otherwise difficult to determine, may be determined as a computerised three-dimensional representation of the products is registered.

The two mutually inclined pair of conveyors of the conveyor unit or units are preferably both inclined with the same angle relative to horizontal forming a V-shaped conveyor configuration. Besides this symmetric inclination, the angle of inclination of the pairs of conveyors is preferably also adjustable, preferably between 0° to 40° relative to horizontal, so that a V-form with a mutual angle of the upper conveyor surfaces is preferably between 100° to 180°.

The angle of inclination may be automatically adjustable so that the control system of the portion cutter apparatus may adjust the inclination of the conveyor units e.g. in response to a batch with a particular product size. The adjustment may be adjustable by means of an actuator mechanism or the like acting on one or more of the conveyor units.

In a preferred embodiment of the invention, common drive means are provided for driving the pair of mutually inclined conveyors with the same conveying velocity. Hereby, it is ensured that the two conveyors in a V-shaped conveyor unit are driven at exactly the same speed so that the products are not turned during the transport from the scanning to the cutting in the portion cutter apparatus according to the invention.

In the preferred embodiment, each of the conveyors is provided with an elastic conveyor belt having an inclined upper conveying surface over a support structure and a lower run where the belt is turned to a horizontal configuration where the belt is engaged by the drive means. By providing a conveyor belt run where only the upper run is inclined, this allows for a simple mechanism for angular adjustment of the conveyor unit.

The drive means preferably includes a drive roller with engagement pins cooperating with traction holes in the conveyor belt; said conveyor belt being held in tension support rollers by leading the belt in a loop run over the drive roller. Thereby it is ensured that the belt may be driven at a very precise conveying velocity.

Preferably, drive rollers of the adjacent two conveyors in a conveyor unit are arranged on a common drive shaft. This further ensures an exact speed of both conveyor belts in the conveyor unit and that the two conveyors are driven synchronously.

The control means is adapted to regulate the conveyor velocity of the conveyor unit and/or the rate of the cutting means in response to a computation of the input of the scanning means and predetermined portion type information. The control means hereby automatically adjust the conveying speed and the rotation of the cutting knife so that the product is cut at predetermined locations and into portions of predetermined sizes. By being able to adjust both the advancing speed and the rate of cutting, an extra flexibility is offered which makes room for an increase in capacity in the apparatus.

In the preferred embodiment, the cutting means includes a rotating knife that is positioned to cutting the products between the second and third conveyor units. However, it is realised that other cutting means may be used without departing from the scope of the invention.

In the following, the invention is described in more detail with reference to the accompanying drawings, in which:
- Fig. 1: is a schematic perspective view of an apparatus according a first preferred embodiment of the invention;
- Fig. 2: is a schematic perspective view of an apparatus according a second preferred embodiment of the invention;
- Fig. 3: is a perspective view of a conveyor unit according to a preferred embodiment of an apparatus according the invention without a conveyor belt mounted thereon;
- Fig. 4: is a front view of the conveyor unit in fig. 3;
- Fig. 5: is a side view of same with a conveyor belt mounted;
- Fig. 6: is a top view of the conveyor unit of fig. 3;
- Fig. 7: is a cross-section view of cross-section B-B in fig. 6; and

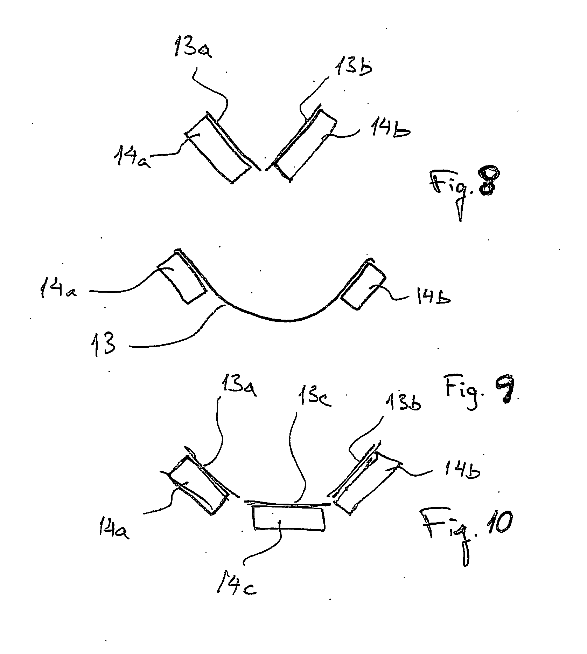

- Figs. 8 to 10: are schematic cross-section views of three different embodiments of the invention.

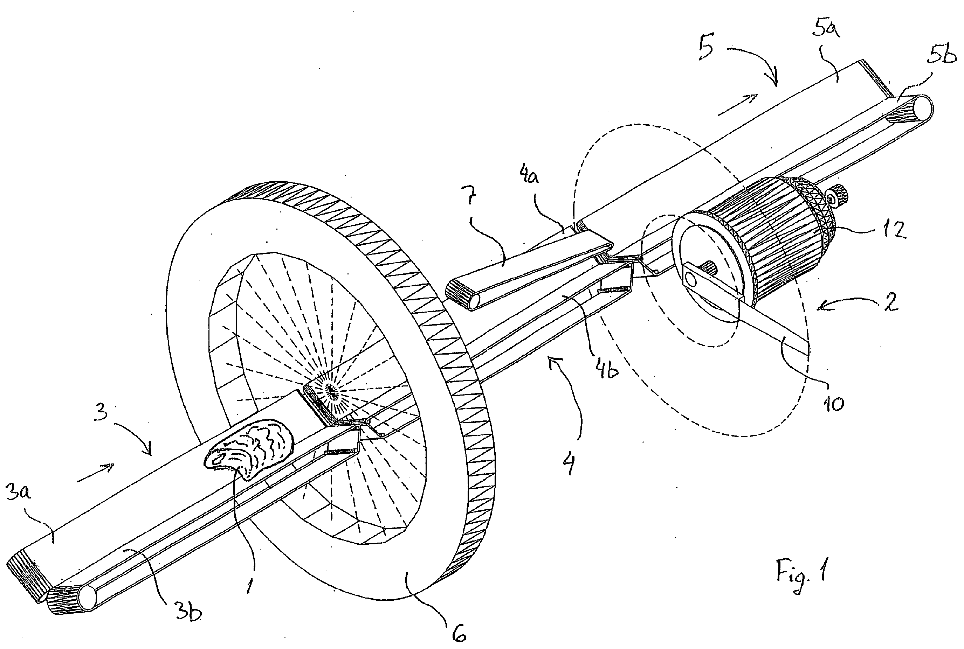

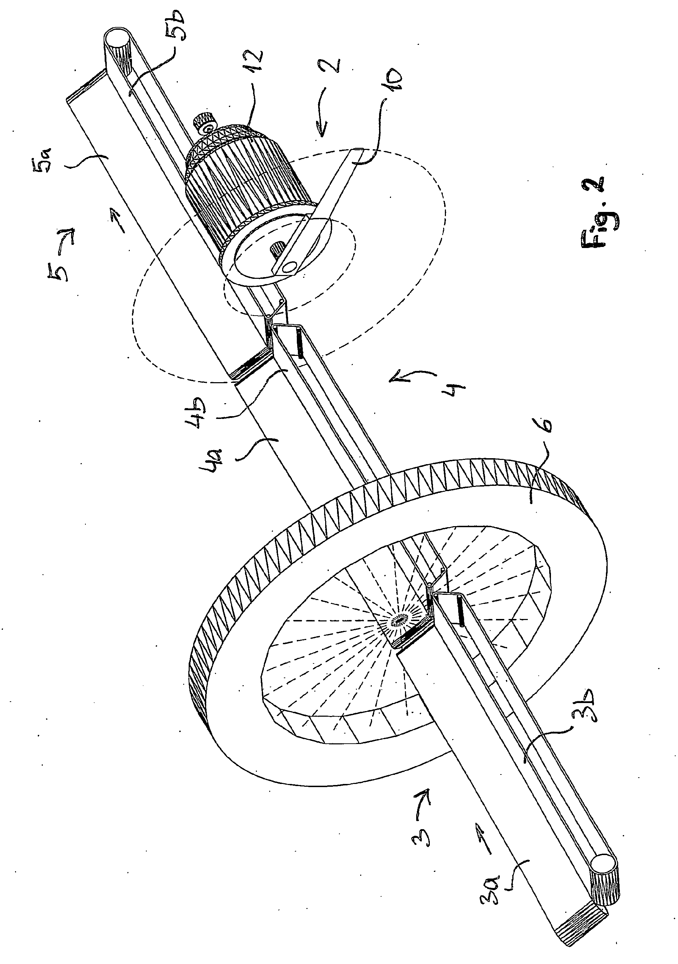

As shown in figures 1 and 2, the preferred embodiment of an apparatus according to the invention comprises three conveyor units 3, 4, 5, which are arranged in alignment next to each other on a support structure (not shown). The entire apparatus is encased in a housing (also not shown). Between the first and second conveyor units 3, 4, a scanning device 6 is provided. This scanning device is preferably adapted to perform a 360° scanning of the items 1, which pass through the scanning plane from the first conveyor unit 3 to the second conveyor unit 4. Hereby, the shape of the item 1 is detected and the three-dimensional shape of the item is calculated. This three-dimensional computer presentation may be created and stored in a control system and used for calculating the cutting of the item into predetermined sizes by the cutting unit 2, which is provided between the second and third conveyor units 4, 5. The cutting unit 2 comprises a rotating knife 10, which is driven by a motor 12. In the control system (not shown), the conveying velocity and the timing of the rotation of the knife is controlled, so that the portion cutting is carried out according to a predetermined portion cutting profile which is stored in the control system. The control system is also provided with the characteristics of the item, such as kind of food item, density, total weight (which may be determined on a flow weight positioned upstream the portion cutter), desired portion sizes, etc.

In a first embodiment, as shown in fig. 1, a holding belt 7 is provided at the end of the second conveyor unit 4. This holding belt 7 is pressed against the top of the item and retains the items 1 during the cutting action and prevents the items from moving during the cutting. However, by the invention it is realised that the inclined conveyor belts makes the need for a holding belt obsolete, as shown in fig. 2. This is furthermore advantageous as the slight pressing force exercised by the holding belt on the item may damage the items, in particular if the items are light meet, such as turkey meet, the item may be compressed which results in an imprecise cutting. Moreover, the holding belt may compromise the surface of the item in particular if the belt is provided with small spikes as the usually are.

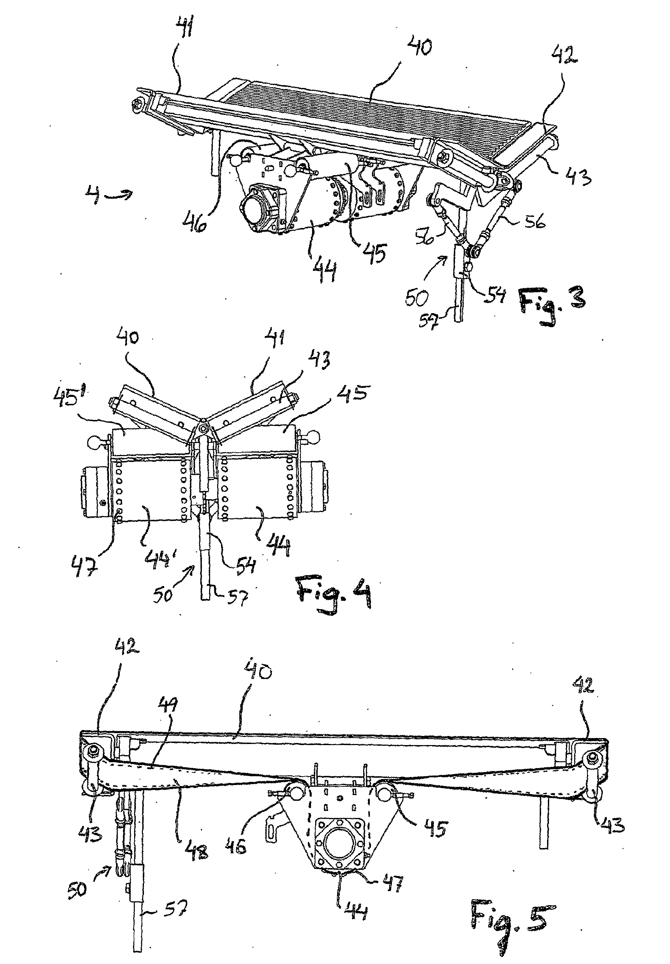

Each of the conveyor units 3, 4, 5 comprises two conveyors 3a, 3b; 4a, 4b and 5a, 5b. The two conveyors 3a, 3b; 4a, 4b and 5a, 5b are mutually inclined so that the conveyor surfaces 40, 41 (see figs. 3, 4 and 7) are provided in a V-shape, as shown in the figures. In the embodiment shown in fig. 1 and 2, all three conveyor units 3, 4, 5 are provided with a V-shape, but it is realised that only the second conveyor needs to be V-shaped in order to achieve the basic advantage of the invention, i.e. that the items do not move on the conveyor after the scanning and before the portion cutting. In figures 9 and 10, other alternative embodiments of a conveyor unit in an apparatus according to the invention are shown. In fig. 3 is shown an embodiment with one conveyor belt 13, which is turned into a U-shape over two sets of rollers 14a and 14b. As shown in fig. 4, the conveyor unit may alternatively be arranged with three or more sets of rolls 14a, 14b, 14c, which support one or more conveyor belts 13a, 13b, 13c for the creation of a U-like shaped conveyor.

Referring to figures 1 and 2, items such as a food product, e.g. fish, beef, pork, turkey or the like, is placed on the first conveyor unit 3 preferably with a relatively short distance between the items. The first conveyor unit 3 forwards the item to a vision system, such as a ring scanner 6. When the scanning device 6 has detected the front end of the item, the second conveyor unit 4, and the holding belt 7 (if mounted) and the third conveyor unit 5 are driven with a conveying velocity in dependence of the velocity of the first conveyor unit 3. When there is no longer items in the vision system 6 and the last item is scanned and cut, the second and third conveyor 4, 5 and the holding belt 7 is stopped whilst the first conveyor unit 3 continues to run until items are again detected in the scanning device. Hereby, it may be achieved that the items 1 are laying relatively close and thereby support each other before and after the portion cutting whilst at the same time, the control system keeps track of where the individual items start and stop, i.e. their exact positions. The third conveyor unit 5 may also be driven with a faster velocity than the others whereby it may also be provided that the cut out portions are "pulled" from each other.

The knife 10 cuts through the item while the second and third conveyor units run. Typically, the knife 10 will be stopped in a position opposite the cutting area, and is accelerated in a swing to its maximum angular velocity within half a revolution. The activation of the knife 10 is controlled by the control system (not shown).

The cutting means preferably comprises a rotating knife, as shown in the figures 1 and 2. However, it is realised by the invention that other kinds of sectioning means by cutting may be used, such as sawing a band saw, disc saw, etc. or a drop knife, ultra sound cutting, water jet cutting or laser cutting, just as knives with different shapes may be used dependent of the particular cutting task, i.e. what kind of food items that is to be sectioned.

The outlet conveyor, i.e. the third conveyor unit 5 could be flat as the items are cut at this stage and it is therefore not of the same importance that they are stationarily positioned on the conveyor.

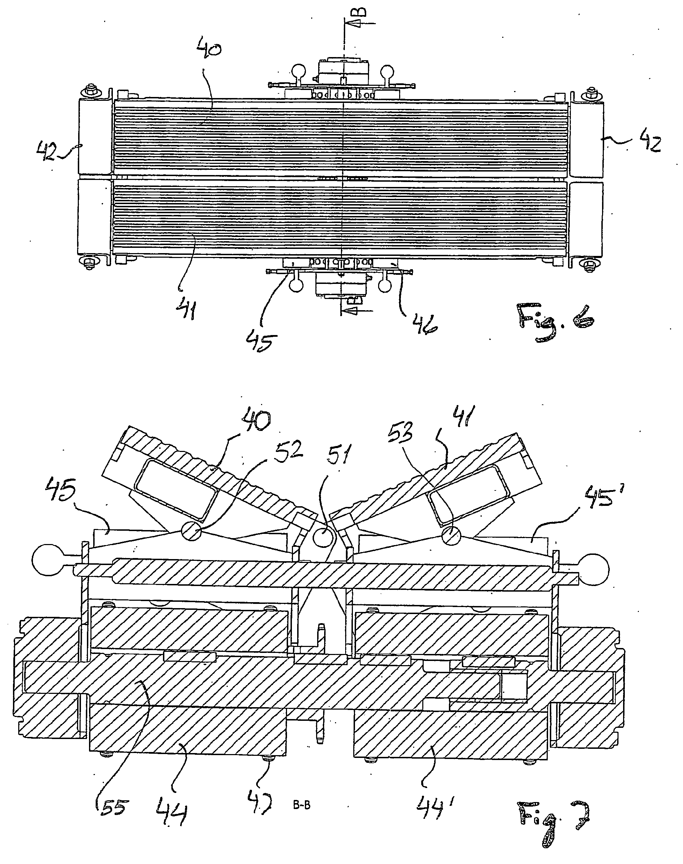

In a preferred embodiment, a common drive motor is provided for the right and left side of the angularly disposed conveyor unit, as shown in figures 3 to 7. In this manner, the speed of the conveyor belts is exactly the same ensuring that the items are not turned during their conveying.

In the figures 3 to 7, a conveyor unit 4 with two mutually inclined conveyors is shown. In figures 3, 4, 6 and 7, the conveyor unit is shown without conveyor belts mounted thereon. The conveyor support surfaces 40, 41 support the upper run of the conveyor belt 48 (se fig. 5). In the following the belt run is described with reference to one belt, but is must be inherently understood that this description applies for both conveyors in the conveyor unit 4. Moreover, this described conveyor unit is preferably provided as both the first, second and third conveyor unit 3, 4, 5 of an apparatus according to the invention. The belt 48 slides over an edge-guiding member 42 provided at both the receiving end and the delivery end of the conveyor, so that a relatively sharp directional turn of the belt is provided. These edge-guiding members 42 are fixedly mounted on the conveyor surface 40, 41 and are thereby angularly displaceable by the angle adjustment means 50. Hereby, a flat conveying surface is provided also and most importantly also in the delivery and receiving ends of the conveyors. In the edge region of the delivery end and the receiving ends of the conveyor, the belt 48 passes between the edge-guiding member 42 and a guide roller 43 and slides over the upper slide edge of a horizontal portion of the slide member 42 and a vertical lowermost edge of the slide member 42. Thereinbetween the belt 48 is engaged by a guide roller 43 which is provided with side guides on each side of the belt 48 to ensure that the belt is not driven sideways "off" the conveyor. The belt 48 is twisted to a generally horizontal orientation on its lower run towards the drive means 44, 45, 46 and twisted back into its angular orientation during its run away from the drive means.

The drive means comprises two horizontally disposed guide rollers 45, 46 guiding the belt into a loop run around the drive roller 44. By the guide rollers 45, 46, the belt 48 is held in firm engagement with the drive roller 44, and since the positions of the guide rollers 45, 46 are adjustable, preferably at least in the horizontal direction, the tension and the angle of engagement between the belt 48 and the drive roller 44 may be regulated. The drive roller 44 is provided with radially protruding traction pins 47 which engage with holes 49 provided on each side edge of the belt 48. Hereby, it is prevented that the belt 48 does not slide on the drive roller 44 and it is ensured a precise conveyor belt velocity is hereby achieved.

As shown in fig. 4 and 7, the two adjacent conveyors in the conveyor unit 4 are mirrored and the drive units have individual guide rollers 45, 45' and drive rollers 44, 44'. The drive rollers 44, 44' are connected to each other, as said drive rollers 44 and 44' are mounted on a common drive shaft 55 which is driven by a motor or the like (not shown).

The two conveyor tables 40, 41 are pivotally mounted on a frame supporting the drive unit. The conveyor surface table 40 is hinged in the conveying direction over an axis 52 and the second conveyor table surface 41 is pivotally mounted on an axis 53 (see fig. 7). Moreover are the two conveyor tables 40, 41 hinged to each other as indicated by 51 in fig. 7. The two conveyor tables 40, 41 are connected to a lever mechanism 56 whereby their angular position may be adjusted by shifting an angle regulation member 54 upwards or downwards along a pole 57.

The invention is described above with reference to some preferred embodiments. However, it is realised that other solutions than these preferred embodiments may be made without departing from the scope of the invention as defined in the claims.

## Claims

1. An apparatus for portion cutting of products, such as food products (1), said apparatus comprising
cutting means (2) for sectioning the products (1);
scanning means (6) for detecting at least one characteristic of the product;
conveying means (4) for transporting the product from the scanning means to the cutting means, and
control means for controlling and regulating at least one relevant cutting process parameters in order to achieve predetermined product portions based on the detected product characteristics,
**characterised in that**
the conveying means comprises at least one conveyor unit (4) having two substantially parallel conveyors (4a; 4b) each having an upper conveying surface, said upper conveying surfaces being inclined relative to each other, so that the conveying surfaces of the conveyors have a mutual angle different from 180° in a traverse direction of the conveying direction.

2. An apparatus according to claim 1, wherein the conveying means (3, 4, 5) comprises a first conveyor unit (3) for receiving the products and downstream of the first conveyor unit (3) a second conveyor unit (4) which takes the products to the cutting means (2) and a third conveyor unit (5) which transports the sectioned products away from the cutting means (2).

3. An apparatus according to claim 2, wherein the first conveyor unit (3) also comprises two parallel mutually inclined conveyors (3a, 3b).

4. An apparatus according to claim 2 or 3, wherein the third conveyor unit (5) also comprises two parallel mutually inclined conveyors (5a, 5b).

5. An apparatus according to claim 3 or 4, wherein the parallel conveyors (3 a, 3b; 4a, 4b; 5a, 5b) of the conveyor units (3, 4, 5) are arranged with the same mutual inclination in each of the conveyor units (3, 4, 5).

6. An apparatus according to any of claims 2 to 5, wherein the scanning means (6) are arranged between the first and the second conveyor units (3, 4).

7. An apparatus according to claim 6, wherein the scanning means (6) includes a scanner adapted to perform a 360° scanning of the products.

8. An apparatus according to any of the preceding claims, wherein the two mutually inclined pair of conveyors (3a, 3b; 4a, 4b; 5a, 5b) of the conveyor unit (4) or units (3, 4, 5) are both inclined with the same angle relative to horizontal forming a V-shaped conveyor configuration.

9. An apparatus according to claim 8, wherein the angle of inclination of the pairs of conveyors (3a, 3b; 4a, 4b; 5a, 5b) is adjustable, preferably between 0° to 40° relative to horizontal, so that a V-form with a mutual angle of the upper conveyor surfaces is preferably between 100° to 180°.

10. An apparatus according to any of the preceding claims, wherein the angle of inclination is automatically adjustable.

11. An apparatus according to any of the preceding claims, wherein the angles of inclination of all the conveyor units are substantially the same.

12. An apparatus according to any of the preceding claims, wherein common drive means are provided for driving the pair of mutually inclined conveyors (3a, 3b; 4a, 4b; 5a, 5b) with the same conveying velocity.

13. An apparatus according to any of the preceding claims, wherein each of the conveyors is provided with an elastic conveyor belt having an inclined upper conveying surface over a support structure and a lower run where the belt is turned to a horizontal configuration where the belt is engaged by the drive means.

14. An apparatus according to claim 13, wherein said drive means including a drive roller with engagement pins cooperating with traction holes in the conveyor belt; said conveyor belt being held in tension support rollers by leading the belt in a loop run over the drive roller.

15. An apparatus according to claim 13 or 14, wherein the drive rollers of the adjacent two conveyors in a conveyor unit are arranged on a common drive shaft.

16. An apparatus according to any of the preceding claims, wherein the control means is adapted to regulate the conveyor velocity of the conveyor unit (4) and the rate of the cutting means in response to a computation of the input of the scanning means and predetermined portion type information.

17. An apparatus according to any of the preceding claims, wherein the cutting means (2) includes a rotating knife (10) that is positioned to cutting the products (1) between the second and third conveyor units (4, 5).

## Patentansprüche

1. Vorrichtung zum Portionsschneiden von Produkten (1), wie etwa Nahrungsmittelprodukten (1), umfassend:
Schneidmittel (2) zum Zerteilen der Produkte (1);
Abtastmittel (6) zum Erfassen wenigstens eines Merkmales des Produktes ;
Fördermittel (4) zum Transportieren des Produktes von den Abstastmitteln zu dem Schneidmitteln, und
Steuermittel zum Steuern und Regulieren wenigstens eines relevanten Scheidprozeß-Parameters, um auf der Grundlage der erfaßten Produktmerkmale vorbestimmte Produktportionen zu erhalten,
**dadurch gekennzeichnet daß**
die Fördermittel wenigstens eine FördereinheiL (4) umfassen, die zwei im wesentlichen parallele Förderer (4a; 4b) aufweist, von denen jeder eine obere Förderoberfläche aufweist, wobei die genannlen oberen Förderoberflächen relativ zueinander geneigt sind, so daß die Förderoberflächen der Förderer gegeneinander einen Winkel aufweisen, der in Querrichtung der Förderrichtung von 180° verschieden ist.

2. Vorrichtung nach Anspruch 1, wobei die Fördermittel (3, 4, 5) eine erste Förderereinheit (3) zur Aufnahme der Produkte und nach der ersten Fördereinheit (3) eine zweite Förderereinheit (4), die die Produkte zu den Schneidmitteln (2) verbringt, und eine dritte Förderereinheit (5), die die zerteilten Produkte von den Schneidmitteln (2) wegführt, umfassen.

3. Vorrichtung nach Anspruch 2, wobei die erste Förderereinheit (3) auch zwei parallele, gegeneinander geneigte Förderer (3a, 3b) umfaßt.

4. Vorrichtung nach Anspruch 2 oder 3, wobei die dritte Förderereinheit (5) auch zwei parallele, gegeneinander geneigte Förderer (5a, 5b) umfaßt.

5. Vorrichtung nach Anspruch 3 oder 4, wobei die parallelen Förderer (3a, 3b; 4a, 4b; 5a, 5b) der Fördereinheiten (3, 4, 5) in jeder der Förderereinheiten (3, 4, 5) mit der gleichen gegenseitigen Neigung angeordnet sind.

6. Vorrichtung nach irgendeinem der Ansprüche 2 bis 5, wobei die Abtastmittel (6) zwischen der ersten und der zweiten Förderereinheit (3, 4) angeordnet sind.

7. Vorrichtung nach Anspruch 6, wobei die Abtastmittel (6) einen Scanner umfassen, der zum Durchführen einer 360°-Abtastung der Produkte eingerichtet ist.

8. Vorrichtung nach einem der vorhergehenden Ansprüche, wobei die zwei gegenseitig geneigten, ein Paar bildenden Förderer (3a, 3b; 4a, 4b; 5a, 5b) der Förderereinheit (4) oder Förderereinheiten (3, 4, 5) beide mit dem gleichen Winkel relativ zur Horizontalen geneigt sind und eine V-förmige Fördererkonfiguration bilden.

9. Vorrichtung nach Anspruch 8, wobei der Neigungswinkel der Paare von Förderern (3a, 3b; 4a, 4b; 5a, 5b) einstellbar ist, und zwar vorzugsweise zwischen 0° und 40° relativ zur Horizontalen, so daß eine V-Form mit einem gegenseitigen Winkel der oberen Fördereroberflächen bevorzugt zwischen 100° und 180° ist.

10. Vorrichtung nach einem der vorhergehenden Ansprüche, wobei der Neigungswinkel automatisch einstellbar ist.

11. Vorrichtung nach einem der vorhergehenden Ansprüche, wobei die Neigungswinkel aller Förderereinheiten im wesentlichen die gleichen sind.

12. Vorrictung nach einem der vorhergehenden Ansprüche, wobei gemeinsame Antriebsmittel zum Antrieb des Paares von gegenseitig geneigten Förderern (3a, 3b; 4a, 4b; 5a, 5b) mit der gleichen Fördergeschwindigkeit vorgesehen sind.

13. Vorrichtung nach einem der vorhergehenden Ansprüche, wobei leder der Förderer mit einem elastischen Förderband versehen ist, das eine geneigte obere Förderoberfläche über einer Tragestruktur und ein unteres Trum hat, wo das Band zu einer horizontalen Konfiguration gedreht wird, wo das Hand mit der Antriebseinrichtung in Eingriff steht.

14. Vorrichtung nach Anspruch 13, wobei die genannten Antriebsmittel eine Antriebswalze mit Eingriffsstiften umfassen, die mit Antriebslöchern im Förderband zusammenwirken; wobei das Förderband in Spannungs-Tragwalzen gehalten wird, indem das Band in einem Schlaufentrum über die Antriebswalze geführt wird.

15. Vorrichtung nach Anspruch 13 oder 14, wobei die Antriebswalzen zweier benachbarber Förderer in einer Förderereinheit auf einer gemeinsamen Antriebswelle angeordnet sind.

16. Vorrichtung nach einem der vorhergehenden Ansprüche, wobei die Steuermittel dazu eingerichtet sind, die Förderergeschwindigkeit der Förderereinheit (4) und die Ganggeschwindigkeit der Schneidmittel in Abhängigkeit von einer Berechnung aus dem Eingang der Abtastmittel und einer vorbestimmten Information über die Portionsart zu regulieren.

17. Vorrichtung nach einem der vorhergehenden Ansprüche, wobei die Schneidmittel (2) ein rotierendes Messer (10) umfassen, das so positioniert ist, daß es die Produkte (1) zwichen der zweiten und dritten Förderereinheit (4, 5) schneidet.

## Revendications

1. Appareil pour couper des portions de produits tels que des produits alimentaires (1), ledit appareil comprenant
des moyens de coupe (2) pour sectionner les produits (1);
des moyens d'exploration (6) pour détecter au moins l'une des caractéristiques des produits;
des moyens de convoyage (4) pour acheminer lesdits produits depuis lesdits moyens d'exploration jusqu'auxdits moyens de coupe, et
des moyens de commande pour piloter et réguler au moins l'un des paramètres pertinents du processus de coupe, en vue d'obtenir des portions de produits prédéterminées sur la base des caractéristiques détectées desdits produits,
**caracterisé par le fait que**
les moyens de convoyage comprennent au moins une unité de convoyage (4) équipée de deux convoyeurs (4a ; 4b) sensiblement parallèles, dont chacun comporte une surface supérieure de convoyage, lesdites surfaces supérieures de convoyage étant inclinées mutuellement de telle sorte que les surfaces de convoyage des convoyeurs présentent un angle mutuel différant de 180° dans une direction transversale à la direction de convoyage.

2. Appareil selon la revendication 1, dans lequel les moyens de convoyage (3, 4, 5) comprennent une première unité de convoyage (3) pour recevoir les produits et, en aval de ladite première unité de convoyage (3), une deuxième unité de convoyage (4) qui achemine lesdits produits vers les moyens de coupe (2), ainsi qu'une troisième unité de convoyage (5) qui évacue les produits sectionnés à l'ecart des moyens de coupe (2).

3. Appareil selon la revendication 2, dans lequel la première unité de convoyage (3) comprend également deux convoyeurs parallèles (3a, 3b) mutuellement inclinés.

4. Appareil selon la revendication 2 ou 3, dans lequel la troisième unité de convoyage (5) comprend également deux convoyeurs parallèles (5a, 5b) mutuellement inclinés.

5. Appareil selon la revendication 3 ou 4, dans lequel les convoyeurs parallèles (3a, 3b ; 4a, 4b ; 5a, 5b) des unités de convoyage (3, 4, 5) sont agencés selon la même inclinaison mutuelle dans chacune desdites unités de convoyage (3, 4, 5).

6. Appareil selon l'une quelconque des revendications 2 à 5, dans lequel les moyens d'exploration (6) sont interposés entre les première et deuxième unités de convoyage (3,4).

7. Appareil selon la revendication 6, dans lequel les moyens d'exploration (6) englobent un dispositif de balayage conçu pour exécuter un balayage exploratoire de 360° des produits.

8. Appareil selon l'une quelconque des revendications précédentes,dans lequel les deux paires mutuellement inclinées de convoyeurs (3a, 3b; 4a, 4b; 5a, 5b) de l'unité de conyoyage (4), ou des unités de convoyage (3,4,5), sont inclinées l'une et l'autre selon le même angle, par rapport à l'horizontale, en formant une configuration de convoyage en V.

9. Appareil selon la revendication 8, dans lequel l'angle d'inclinaison des paires de convoyeurs (3a, 3b; 4a, 4b ; 5a, 5b) est réglable vis-à-vis de l'horizontale, de préférence entre 0° et 40°, de telle sorte qu'une configuration en V des surfaces supérieures du convoyage, offrant un angle mutuel, soit de préférence située entre 100° et 180°.

10. Appareil selon l'une quelconque des revendications précédentes, dans lequel l'angle d'inclinaison est réglable automatiquement.

11. Appareil selon l'une quelconque des revendications précédentes, dans lequel les angles d'inclinaison de toutes les unités de convoyage sont sensiblement identiques.

12. Appareil selon l'une quelconque des revendications précédentes, dans lequel des moyens communs d'entraînement sont prévus pour entraîner, à la même vitesse de convoyage, la paire de convoyeurs mutuellement inclinés (3a, 3b; 4a, 4b; 5a, 5b).

13. Appareil selon l'une quelconque des revendications précédentes, dans lequel chacun des convoyeurs est muni d'une courroie convoyeuse élastique comprenant une surface supérieure de convoyage inclinée sur une structure de support, et un brin inférieur sur lequel ladite courroie est amenée il une configuration horizontale dans laquelle ladite courroie vient en prise avec les moyens d'entraînement.

14. Appareil selon la revendication 13, dans lequel lesdits moyens d'entraînement comportent un rouleau d'entraînement doté de broches de venue en prise coopérant avec des trous de traction pratiqués dans la courroie convoyeuse; ladite courroie convoyeuse étant retenue dans des rouleaux de support en tension, suite à un guidage de ladite courroie suivant un défilement en boucle sur ledit rouleau d'entraînement.

15. Appareil selon la revendication 13 ou 14, dans lequel les rouleaux d'entraînement des deux convoyeurs adjacents dans une unité de convoyage sont calés sur un arbre menant commun.

16. Appareil selon l'une quelconque des revendications précédentes, dans lequel les moyens de commande sont conçus pour réguler la vitesse de convoyage de l'unité de convoyage (4) et l'allure de marche des moyens de coupe, en réponse à un calcul de la valeur d'entrée des moyens d'exploration, et à des informations prédéterminées typiques du portionnement.

17. Appareil selon l'une quelconque des revendications précédentes, dans lequel les moyens de coupe (2) englobent un couteau rotatif (10) placé de manière à sectionner les produits (1) entre les deuxième et troisième unités de convoyage (4,5).
